# EUROPÄISCHE PATENTANMELDUNG

(11) **EP 1 722 492 A2**
(43) Veröffentlichungstag der Anmeldung: **15.11.2006**
(21) Anmeldenummer: 06008055.3
(22) Anmeldetag: 19.04.2006
(51) Int. Cl.: H04B 7/26

(54) **Verfahren zum Betrieb eines TDMA-Kommunikationssystems mit einer fest vorgegebenen Anzahl an möglichen Knoten und einer Basisstation**

(30) Priorität: 04.05.2005 DE 102005020733
(71) Anmelder: ABB PATENT GmbH, 68526 Ladenburg (DE)
(72) Erfinder: Steigmann, Richard, Dipl.-Ing., 67229 Gerolsheim (DE); Endresen, Jan, 1385 Asker (NO)
(74) Vertreter: Miller, Toivo

(57) **Zusammenfassung**

Es wird ein Verfahren zum Betrieb eines TDMA-Kommunikationssystems mit einer fest vorgegebenen Anzahl an möglichen Knoten (S1, S2...) und einer Basisstation (BS) vorgeschlagen, wobei die Kommunikation innerhalb zyklischer TDMA-Datenübertragungsblöcke (FR.1, FR.2...) stattfindet und sich jeder TDMA-Datenübertragungsblock aus sukzessive nacheinander folgenden Zeitschlitzen (TS1, TS2...) zusammensetzt. Den einzelnen Knoten des Systems werden unterschiedliche Ring-Umlaufzeiten zugewiesen, indem jedem einzelnen Knoten unter Beachtung von Prioritäts-Gesichtpunkten und der Charakteristik des Knotens entweder lediglich ein Zeitschlitz oder mehrere verschiedene Zeitschlitze (TS.1, TS.2, TS.n.....TS.N) innerhalb eines einzigen TDMA-Datenübertragungsblocks (FR1, FR2...) zugeordnet ist/sind.

## Beschreibung

Die Erfindung bezieht sich auf ein Verfahren zum Betrieb eines TDMA-Kommunikationssystems (Time Division Multiple Access) mit einer fest vorgegebenen Anzahl an möglichen Knoten und einer Basisstation gemäß dem Oberbegriff des Patentanspruchs.

Die Erfindung kann insbesondere bei einem System mit einer Vielzahl drahtloser Sensoren und/oder Aktoren (Knoten) und einer Basisstation verwendet werden, welches in einer Maschine oder Anlage, beispielsweise Industrieroboter, Herstellungsautomat oder Fertigungsautomat installiert ist. Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

In der DE 199 26 799 A1 wird ein System für eine eine Vielzahl von drahtlosen Näherungssensoren aufweisende Maschine, insbesondere Fertigungsautomat, vorgeschlagen, wobei
- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

Für die Funkübertragung wird dabei vorzugsweise die TDMA-Technologie (Time Division Multiple Access) eingesetzt, bei der die Informationen von/zu den Aktoren bzw. Sensoren (Knoten) in Form zyklischer TDMA-Datenübertragungsblöcke übermittelt wird, wobei jedem Sensor/Aktor ein bestimmter Zeitschlitz innerhalb eines Datenübertragungsblockes zugeordnet ist.

Aus der DE 101 16 285 A1 ist ein Verfahren zum Betrieb eines Systems mit mehreren Knoten und einer Basisstation gemäß TDMA (Time Division Multiple Access) bekannt, wobei zyklische TDMA-Datenübertragungsblöcke übertragen werden und sich jeder TDMA-Datenübertragungsblock aus sukzessive nacheinander folgenden Zeitschlitzen zusammensetzt, wobei jeder Zeitschlitz einem bestimmten Knoten zugeordnet ist. Zu Beginn eines jeden Zeitschlitzes wird der beim vorausgegangenen TDMA-Datenübertragungsblock für diesen Zeitschlitz eingestellte Verstärkungswert im Empfänger der Basisstation als Voreinstellwert übernommen und voreingestellt.

Aus der DE 101 16 286 A1 ist ein Verfahren zum Betrieb eines Systems mit mehreren Knoten und einer Basisstation gemäß TDMA bekannt, wobei zyklische TDMA-Datenübertragungsblöcke übertragen werden und sich jeder TDMA-Datenübertragungsblock aus sukzessive nacheinander folgenden Zeitschlitzen zusammensetzt, wobei jeder Zeitschlitz einem bestimmten Knoten zugeordnet ist. Zu Beginn eines jeden Zeitschlitzes wird der beim vorausgegangenen TDMA-Datenübertragungsblock für diesen Zeitschlitz für die Signal-Detektion eingestellte frequenzabweichungsbedingte Gleichstromanteil oder die Phasendrehung im Empfänger der Basisstation als Voreinstellwert übernommen und voreingestellt.

Allgemein haben bei einem in einer Maschine oder Anlage (Fertigungsautomat) installierten System mit einer Vielzahl von drahtlos mit einer Basisstation kommunizierenden Knoten einzelne Knoten eine größere Bedeutung für den Fertigungsprozess als andere Knoten.

Der Erfindung liegt die Aufgabe zugrunde, ein Verfahren zum Betrieb eines TDMA-Kommunikationssystems mit einer fest vorgegebenen Anzahl an möglichen Knoten und einer Basisstation der eingangs genannten Art anzugeben, welches eine bevorzugte Behandlung einzelner besonders wichtiger Knoten unter Prioritäts-Gesichtpunkten ermöglicht.

Diese Aufgabe wird in Verbindung mit den Merkmalen des Oberbegriffes erfindungsgemäß durch die im Kennzeichen des Patentanspruchs angegebenen Merkmale gelöst.

Die mit der Erfindung erzielbaren Vorteile bestehen insbesondere darin, dass es ermöglicht wird, jedem einzelnen Knoten des TDMA-Kommunikationssystems im Hinblick auf System-Optimierungs-Gesichtspunkte, insbesondere Dynamik des relevanten Prozesses, beispielsweise Fertigungsprozesses, entweder lediglich einen einzigen Zeitschlitz oder mehrere Zeitschlitze pro TDMA-Datenübertragungsblock zuzuweisen. Somit ergeben sich unterschiedliche Ring-Umlaufzeiten der einzelnen Knoten entsprechend den dynamischen Gegebenheiten/Anforderungen des Prozesses und den unterschiedlichen Charakteristiken der Knoten.

Weitere Vorteile sind aus der nachstehenden Beschreibung ersichtlich.

Die Erfindung wird nachstehend anhand der in der Zeichnung dargestellten Ausführungsbeispiele erläutert. Es zeigen:
- Fig.1: ein TDMA-Kommunikationssystem mit einer bestimmten Anzahl von drahtlos mit einer Basisstation kommunizierenden Knoten,
- Fig. 2: ein Ausführungsbeispiel für einen zyklischen TDMA-Datenübertragungs-block,
- Fig. 3: eine Folge von sukzessive aufeinanderfolgenden TDMA-Daten-übertragungsblöcken.

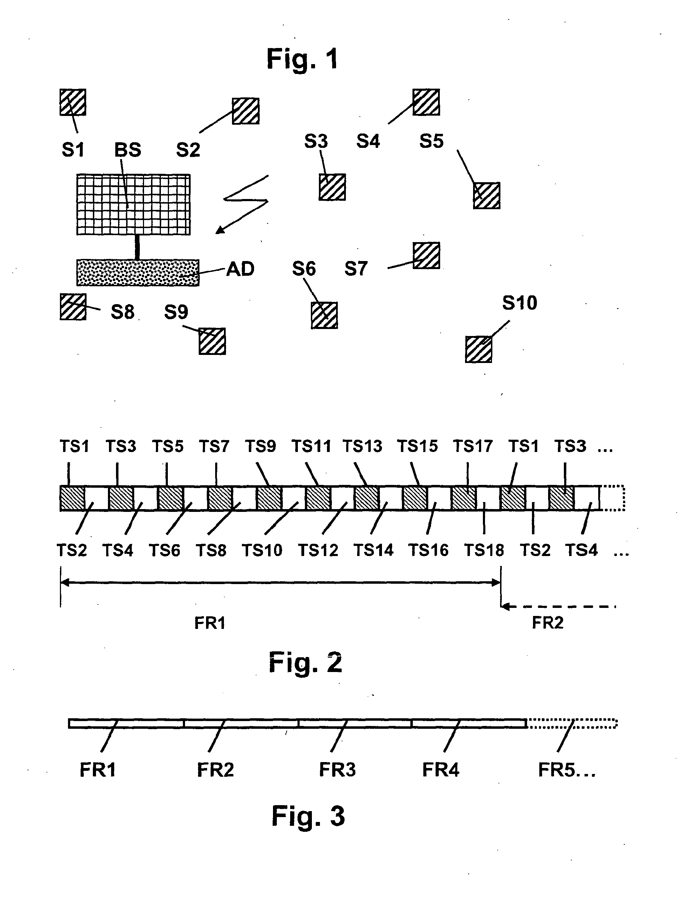

In Fig. 1 ist ein TDMA-Kommunikationssystem mit einer bestimmten Anzahl an möglichen drahtlos mit einer Basisstation BS kommunizierenden Knoten, vorzugsweise Sensoren und/oder Aktoren, dargestellt. Beim betrachteten Ausführungsbeispiel sind zehn Knoten S1, S2, S3, S4, S5, S6, S7, S8, S9, S10 vorgesehen, welche innerhalb einer Anlage installiert oder an einer Maschine, insbesondere einem Fertigungsautomat befestigt sind.

Bei Ausbildung eines Knotens als Sensor weist dieser einen die Sensorumgebung detektierenden Sensorkopf mit nachgeschalteter Signalauswertung auf. Bei Ausbildung eines Knotens als Aktor weist dieser eine Aktoreinheit (beispielsweise ein Druckluftventil oder ein Schütz) sowie eine Ansteuereinheit hierfür auf.

Die Knoten weisen jeweils eine Kommunikationseinrichtung auf, welche den erforderlichen Funksender und Funkempfänger enthält, um derart eine drahtlose Kommunikation zwischen der Basisstation BS und den Knoten (und umgekehrt) zu ermöglichen. Die Kommunikation erfolgt auf einer einzigen Funkfrequenz von der Basisstation zu den Knoten (downlink) und auf einer einzigen oder mehreren hiervon unterschiedlichen Frequenzen von den Knoten zur Basisstation (uplink). Bei einem Sensor gelangt das aufbereitete Sensorsignal zu einem Modulator / Codierer mit nachgeschaltetem Funksender und Antenne, wo es an die Basisstation BS gesendet wird. Bei einem Aktor gelangt das von einer Basisstation BS gesendete Ansteuersignal über eine Antenne, einen Funkempfänger und einen Demodulator / Decodierer zur Ansteuereinheit.

Die Basisstation BS ist zweckmäßig an ein Automatisierungsgerät AD (Speicher-programmierbare Steuerung oder andere) angeschlossen und weist eine Kommunikationseinrichtung auf, welche Sensorsignale der Sensoren und Meldesignale betreffend den aktuellen Zustand von Aktoren (uplink, von den Knoten zur Basisstation) empfängt, Ansteuersignale zur Aktivierung / Deaktivierung der Aktoren abgibt und Signale zur Einstellung von spezifischen Parametern der Aktoren und Sensoren abgibt (downlink, von der Basisstation zu den Knoten). Die Kommunikationseinrichtung der Basisstation BS weist eine oder mehrere Antenne auf, an welche Funkempfänger und Funksender angeschlossen sind. Die Signale des Funkempfängers werden einem (oder mehreren) Demodulator / Decodierer zugeführt und dem Funksender (einer oder mehrere) ist ein (oder mehrere) Modulator / Codierer vorgeschaltet.

In Fig. 2 ist ein Ausführungsbeispiel für einen zyklischen TDMA-Datenübertragungsblock dargestellt, wie er beim vorgeschlagenen System verwendet wird. Ein derartiger Datenübertragungsblock oder Rahmen FR1 setzt sich aus jeweils mehreren - im Ausführungsbeispiel aus achtzehn - sukzessive nacheinander folgenden Zeitschlitzen TS1, TS2, TS3, TS4, TS5, TS6, TS7, TS8, TS9, TS10, TS11, TS12, TS13, TS14, TS15, TS16, TS17, TS18 zusammen. Für die diskontinuierliche Signalübertragung folgen die TDMA-Datenübertragungsblöcke FR1, FR2, FR3, FR4, FR5... unmittelbar sukzessive aufeinander, wie dies in Fig. 3 dargestellt ist.

Obwohl beispielsweise die Sensoren ihre Nachrichten in zufälligen Augenblicken generieren, erfolgt eine strikt an den zugeordneten Zeitschlitz bzw. die zugeordneten Zeitschlitze angepasste Übertragung. Um sicherzustellen, dass die in einem Zeitschlitz enthaltene Information auch dem richtigen Aktor zugeordnet wird, bzw. um sicherzustellen, dass ein Sensor die der Basisstation zu übermittelnde Information während des richtigen Zeitschlitzes absendet, enthält jeder Zeitschlitz ein typisches Synchronisationswort (oder ähnliches) zur exakten Synchronisierung zwischen Basisstation einerseits und Knoten andererseits. Der Empfänger der Basisstation BS kann aus der jedem Zeitschlitz zugeordneten Nummer unverwechselbar den jeweiligen Funksender, d. h. den relevanten Knoten bestimmen.

Da bei einem TDMA-Datenübertragungsblock mehr Zeitschlitze (hier achtzehn) vorgesehen sind, als dies im Hinblick auf die Anzahl der Knoten (hier zehn) des TDMA-Kommunikationssystems an sich erforderlich wäre, können einem bestimmten Knoten mehrere Zeitschlitze zugeordnet sein.

Für das Ausführungsbeispiel gemäß Fig. 2 mit zehn Knoten und achtzehn Zeitschlitzen pro TDMA-Datenübertragungsblock ist z. B. folgende Zuordnung möglich:
- Zeitschlitz TS1 wird Knoten S1 zugeordnet,
- Zeitschlitz TS2 wird Knoten S2 zugeordnet,
- Zeitschlitz TS3 wird Knoten S3 zugeordnet,
- Zeitschlitz TS4 wird Knoten S4 zugeordnet,
- Zeitschlitz TS5 wird Knoten S5 zugeordnet,
- Zeitschlitz TS6 wird Knoten S1 zugeordnet,
- Zeitschlitz TS7 wird Knoten S6 zugeordnet,
- Zeitschlitz TS8 wird Knoten S7 zugeordnet,
- Zeitschlitz TS9 wird Knoten S4 zugeordnet,
- Zeitschlitz TS10 wird Knoten S8 zugeordnet,
- Zeitschlitz TS11 wird Knoten S1 zugeordnet,
- Zeitschlitz TS12 wird Knoten S9 zugeordnet,
- Zeitschlitz TS13 wird Knoten S10 zugeordnet,
- Zeitschlitz TS14 wird Knoten S4 zugeordnet,
- Zeitschlitz TS15 wird Knoten S6 zugeordnet,
- Zeitschlitz TS16 wird Knoten S1 zugeordnet,
- Zeitschlitz TS17 wird Knoten S7 zugeordnet,
- Zeitschlitz TS18 wird Knoten S8 zugeordnet.
   Wie aus diesem Ausführungsbeispiel gemäß Fig. 2 hervorgeht,
- sind dem Knoten S1 während eines TDMA-Datenübertragungsblocks vier Zeitschlitze TS1, TS6, TS11, TS16 zugeordnet, d. h. dieser im Hinblick auf dynamische Gesichtpunkte besonders wichtige Knoten sendet während eines einzigen TDMA-Datenübertragungsblocks zu vier unterschiedlichen Zeitpunkten Daten an die Basisstation BS ab,
- sind dem Knoten S4 während eines TDMA-Datenübertragungsblocks drei Zeitschlitze TS4, TS9, TS14 zugeordnet, d. h. dieser Knoten hat während eines TDMA-Datenübertragungsblocks zu drei unterschiedlichen Zeitpunkten die Möglichkeit, Daten an die Basisstation BS abzusenden,
- haben die Knoten S6 bzw. S7 bzw. S8 während eines TDMA-Datenübertragungsblocks zu zwei unterschiedlichen Zeitpunkten - korrespondierend zu den Zeitschlitzen TS7, TS15 bzw. TS8, TS17 bzw. TS10, TS18 - die Möglichkeit, Daten an die Basisstation BS abzusenden,
- haben die übrigen Knoten S2 bzw. S3 bzw. S5 bzw. S9 bzw. S10 während eines TDMA-Datenübertragungsblocks zu lediglich einem Zeitpunkt - korrespondierend zu den Zeitschlitzen TS2 bzw. TS3 bzw. TS5 bzw. TS12 bzw. TS13 - die Möglichkeit, Daten an die Basisstation BS abzusenden.

Mit anderen Worten werden nach Prioritäts-Gesichtspunkten den wichtigeren Knoten mehr Zeitschlitze innerhalb eines TDMA-Datenübertragungsblocks zugeordnet als den unwichtigeren Knoten. Die Rinq-Umlaufzeit des Knotens S1 ist vierfach höher ais die Ring-Umlaufzeit der Knoten S2, S3, S5, S9, S10. Die Ring-Umlaufzeit des Knotens S4 ist dreifach höher als die Ring-Umlaufzeit der Knoten S2, S3, S5, S9, S10. Die Ring-Umlaufzeit der Knoten S6, S7, S8 ist zweifach höher als die Ring-Umlaufzeit der Knoten S2, S3, S5, S9, S10. Im Hinblick auf die bei der Datenübertragung auftretenden Verzögerungen ergibt sich somit eine Prozess-Optimierung.

Bezugszeichenliste:
- AD: Automatisierungsgerät
- BS: Basisstation
- FR1, FR2...: TDMA-Datenübertragungsblock
- S1, S2...: Knoten (Sensoren, Aktoren)
- TS1, TS2...: Zeitschlitze eines TDMA-Datenübertragungsblocks

## Patentansprüche

1. Verfahren zum Betrieb eines TDMA-Kommunikationssystems mit einer fest vorgegebenen Anzahl an möglichen Knoten (S1, S2...) und einer Basisstation (BS), wobei die Kommunikation innerhalb zyklischer TDMA-Datenübertragungsblöcke (FR.1, FR.2...) stattfindet und sich jeder TDMA-Datenübertragungsblock aus sukzessive nacheinander folgenden Zeitschlitzen (TS1, TS2...) zusammensetzt, **dadurch gekennzeichnet, dass** den einzelnen Knoten des Systems unterschiedliche Ring-Umlaufzeiten zugewiesen werden, indem jedem einzelnen Knoten unter Beachtung von Prioritäts-Gesichtpunkten und der Charakteristik des Knotens entweder lediglich ein Zeitschlitz oder mehrere verschiedene (TS.1, TS.2, TS.n.....TS.N) innerhalb eines einzigen TDMA-Datenübertragungsblocks (FR1, FR2...) zugeordnet ist/sind.
